(19) Europäisches Patentamt
European Patent Office
Office européen des brevets

(11) Veröffentlichungsnummer: **0 311 952**
**A2**

(12) # EUROPÄISCHE PATENTANMELDUNG

(21) Anmeldenummer: **88116777.9**

(51) Int. Cl.⁴: **H02B 1/20**

(22) Anmeldetag: **10.10.88**

(30) Priorität: **14.10.87 DE 3734804**

(43) Veröffentlichungstag der Anmeldung: **19.04.89 Patentblatt 89/16**

(84) Benannte Vertragsstaaten: **DE FR GB**

(71) Anmelder: **Asea Brown Boveri Aktiengesellschaft**
**Kallstadter Strasse 1**
**D-6800 Mannheim 31(DE)**

(72) Erfinder: **Schwarz, Gerhard**
**Zollerwaldstrasse 9**
**D-6936 Allemühl(DE)**
Erfinder: **Magin, Andreas**
**Alte Zwingenberger Strasse 23**
**D-6934 Neckargerach(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Sammelschienenträger.**

(57) Ein Sammelschienenträger mit einem langgestreckten Isoliergehäuse (11) weist eine langgestreckte Stromsammelschiene (12) auf, an der Anschlußleiter mittels Klemmschrauben festgeklemmt werden können. Damit der Einbau des Sammelschienenträgers sowie die Zuordnung der Anschlußleiter zu den entsprechenden Installationsgeräten leichter erfolgen kann, ist parallel zum Isoliergehäuse (11) ein Träger (10) vorgesehen, der mit dem Isoliergehäuse mittles quer dazu verlaufender Tragarme (13, 14) verbunden ist. Am Träger ist eine Normprofiltragschiene (15, 16) zum Aufschnappen von Installationsgeräten angeordnet.

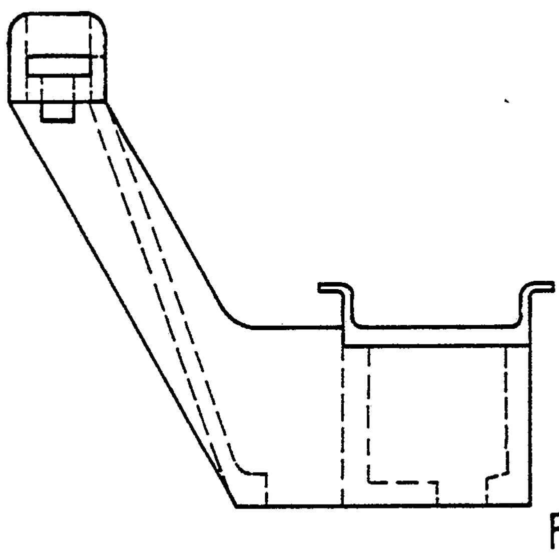

Fig.3

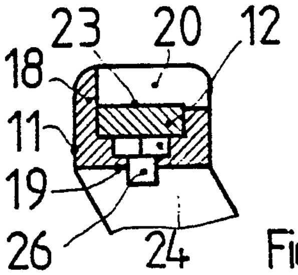


Fig.4

EP 0 311 952 A2

## Sammelschienenträger

Die Erfindung betrifft einen Sammelschienenträger mit einem langgestreckten Isoliergehäuse, das eine langgestreckte Sammelschiene aufnimmt, an der Anschlußleiter mittels Klemmschrauben festklemmbar sind.

Derartige Sammelschienen sind z.B. aus der DE-PS 30 16 625 oder der DE-PS 34 37 463 bekanntgeworden. Die dort beschriebenen Sammelschienen dienen dazu, den über eine elektrische Leitung in ein Installationsgehäuse eingeführten Strom auf mehrere Installationsgeräte, vorzugsweise Schaltgeräte, zu verteilen. Der Sammelschienenträger nach der DE-PS 30 16 625 wird am Boden des Installationsgehäuse befestigt. Hierzu sind im Isoliergehäuse Bohrungen vorgesehen, durch die Befestigungsschrauben hindurchgeschraubt werden können. Bei dem Sammenschienenträger nach der DE-PS 34 37 463 ist über die Befestigung nichts ausgesagt; es ist aber anzunehmen, daß der Sammelschienenträger in gleicher Weise im Gehäuse befestigt wird wie der der DE-PS 30 16 625.

Bei beiden wird eine genaue Zuordnung, der Sammelschiene bzw. deren Anschlußklemmstellen zu den Installationsgeräten im Gehäue nicht zwingend erzielt.

Aufgabe der Erfindung ist es, einen Sammenschienenträger der eingangs genannten Art zu schaffen, bei dem die Zuordnung der Anschlußklemmstellen zu den Installationsgeräten immer richtig und im richtigen Abstand erfolgt.

Diese Aufgabe wird erfindungsgemäß dadurch gelöst, daß parallel zum Isoliergehäuse ein Träger vorgesehen ist, der mit dem Isoliergehäuse mittels quer dazu verlaufender Tragarme verbunden ist, und daß am Träger eine Normprofiltragschiene zum Aufschnappen von Installationsgeräten angeordnet ist.

Zwar ist aus der DE-AS 15 40 378 bekannt geworden, an einer Grundplatte sowohl Installationsgeräte als auch eine Sammelschiene zu befestigen. Hier dient die Sammelschiene zur Halterung der Installationsgeräte; und eine Nulleiterschiene, die neben den Installationsgeräten auf der Grundplatte angebracht ist, bewirkt keine exakte Zuordnung der Installationsgeräte zu den Anschlußklemmstellen an der Nulleiterschiene.

Diese Normprofiltragschiene, die vorzugsweise als Hutprofiltragschiene ausgebildet ist, kann entweder durch am Träger angeordnete längs und parallel zur Sammelschiene verlaufende L-förmige Leisten gebildet sein, deren freie Schenkelenden voneinander wegweisend ausgerichtet sind und miteinander die hutprofilartige Tragschiene für die Installationsgeräte bilden; diese Leisten sind am Träger angeformt; es besteht auch die Möglichkeit, daß die Normprofiltragschiene als eigenes Bauteil am Träger befestigt, z. B. festgerastet ist.

Im letzteren Falle, wenn also die Normprofiltragschiene am Träger festgerastet ist, ist zweckmäßigerweise der Träger eine rechteckige ebene Platte, auf deren oberer Fläche ein die Platte an ihren quer zur Längserstreckung des Isolierkörpers verlaufenden Seitenkanten überragender Aufsatz vorgesehen ist, auf deren Oberseite die Normprofiltragschiene angebracht ist. Dieser Aufsatz ist zweckmäßigerweise kastenartig ausgebildet.

In besonders vorteilhafter Ausgestaltung der Erfindung befindet sich die Klemmenebene, das heißt also die Ebene in der sich die Sammelschiene befindet, in horizontalem Abstand zum Träger und bezogen auf die Aufschnappebene vertikal dazu versetzt. Die vertikale Versetzung ist durch die Höhe der auf die Normprofiltragschiene aufschnappbaren Installationsgeräte festgelegt.

Die Tragarme verlaufen in vorteilhafter Weise unter einem spitzen Winkel zur Aufschnappebene und sie können gegebenenfalls auch L-förmig sein. Wenn die Tragarme an den Seitenkanten der Platten anschließen, dann sind sie gerade und dann, wenn sie an dem kastenartigen Aufsatz anschließen, L-förmig abgewinkelt, wobei der Winkel zwischen den beiden ein Winkel von ca. 120° ist.

Durch die Erfindung wird also eine klare Zuordnung zwischen der Normprofiltragschiene, auf der die elektrischen Installationsgeräte aufgeschnappt werden können, und der Sammelschiene insoweit hergestellt, als die Anschlußklemmen am Installationsgerät in Höhe der Stromsammelschiene angeordnet werden, und insbesondere durch die definierte und festgelegte Zuordnung der Installationsgeräte zu der Sammelschiene bilden beide eine vorfertigbare Einheit, der Gestalt, daß die Installationsgeräte an der Sammelschiene angeschlossen werden können, bevor der Sammenschienenträger im Installationsgehäuse befestigt wird.

Weitere vorteilhafte Ausgestaltungen und Verbesserungen sind den weiteren Unteransprüchen zu entnehmen.

Anhand der Zeichnung, in der zwei Ausführungsbeispiele der Erfindung dargestellt sind, sollen die Erfindung sowie weitere vorteilhafte Ausgestaltungen und Verbesserungen und weitere Vorteile näher erläutert und beschrieben werden.

Es zeigen:

Figur 1 eine Seitenansicht auf eine erste Ausführungsform eines Sammenschienenträgers,

Figur 2 eine Aufsicht von oben auf den Sammenschienenträger gemäß Figur 1,

Figur 3 eine Seitenansicht des Sammelschienenträgers gemäß Figur 1 und 2,

Figur 4 eine Schnittansicht gemäß Schnittlinie A-A, der Figur 1 bis 3 von vorn,

Figur 5 eine Schnittansicht gemäß Schnittlinie B-B der Figuren 1 bis 3,

Figur 6 eine Seitenansicht auf ein weiteres Ausführungsbeispiel der Erfindung, teilweise geschnitten,

Figur 7 eine Aufsicht gemäß Pfeilrichtung C nach Figur 6,

Figur 8 eine Teilansicht auf den Sammelschienenträger gemäß Pfeilrichtung D der Figur 7.

In den Zeichnungen sind zwei Ausführungsformen der Erfindung dargestellt und bei beiden ergibt sich als Grundaufbau: Jeder Sammelschienenträger ist aus einem Träger 10 und einem Isoliergehäuse 11, das zur Aufnahme einer Stromsammelschiene 12 dient, zusammengesetzt, wobei das Isoliergehäuse 11 mit dem Träger 10 mittels zweier Tragarme 13 und 14 verbunden ist.

Der Träger 10 nach der ersten Ausführungsform ist etwa plattenförmig ausgebildet und er besitzt zwei L-förmige Leisten 15 und 16, deren freie Schenkelenden voneinander wegweisen und miteinander eine Hutprofilschiene bilden, auf der Installationsgeräte aufgeschnappt werden können.

Die Tragarme 13 und 14 verlaufen etwa L-förmig unter einem Winkel von ca. 120° zu der Aufschnappebene der Hutprofilschienen 15/16 und der Abstand der Stromsammelschienen 12 quer zu der Aufschnappebene an der Hutprofilschiene 15/16 von dieser Aufschnappebene entspricht dem Abstand, den die Anschlußklemmen an den Installationsgeräten, die auf die Hutprofilschienen aufgeschnappt werden können, von der Aufschnappebene am Boden der Installationsgeräte einnehmen.

Der Isolierkörper 11, der in Fig. 4 bzw. 5 im Schnitt dargestellt ist, besitzt an einer Längskante eine Stegwand 18, die senkrecht zu dem Bodenteil 19 des Isolierkörpers 11 verläuft, und senkrecht sowohl zur Stegwand 18 als auch zum Bodenteil 19 verlaufende Trennwände 20,21, die einzelne Klemmräume 22 voneinander trennen, in denen jeweils eine Klemmschraube 17 befindlich ist. Die Trennwände 20,21 besitzen jeweils eine Querdurchbrechung 23, durch die die Stromsammelschiene 12 hindurchgesteckt wird. In jedem Klemmraum 22 befindet sich unten im Bodenteil eine Vertiefung 24, die ein Vier- oder Sechskantprofil aufweist, so daß in diese Vertiefungen Muttern 25 eingesetzt werden können, in die Klemmschrauben 17 einschraubbar sind; zusätzlich ist in jeder Vertiefung noch ein Sackloch 26 vorgesehen, damit die Klemmschrauben 17 in die Muttern 25 eingeschraubt werden können.

Die Tragarme oder Trägerarme 13 und 14 sind als Doppelwandträgerarme ausgebildet und besitzen eine quer dazu verlaufende strichliert gezeichnete Verstärkungswand 27; unterhalb des als Platte ausgebildeten Trägers ist ein kastenförmiger, in Verlängerung der Doppelwände der Träger 13/14 verlaufender kastenförmiger Aufsatz 28, mit dem der Sammelschienenträger auf den Boden eines Installationsgerätes aufgestellt wird und dort mittels Halteschrauben (nicht näher dargestellt) befestigt wird. Der Sammelschienenträger, wie er in den Figuren 1 bis 5 dargestellt ist, hat den Vorteil, daß die Stromsammelschiene und die Installationsgeräte auf dem Träger in richtiger Weise einander zugeordnet vormontiert und mittels Anschlußleitern auch vorverdrahtet werden können; nach dieser Vorverdrahtung und Vormontierung kann die gesamte Einheit aus Sammelschienenträger, Installationsgeräten und Sammelschiene auf dem Boden des Installationsgehäuses befestigt werden. Natürlich besteht auch die Möglichkeit, zunächst den Sammelschienenträger am Boden des Installationsgehäuses zu befestigen und erst danach die Montage der Installationsgeräte sowie die Verdrahtung der Installationsgeräte hin zur Sammelschiene vorzunehmen.

In den Figuren 6 und 8 ist eine weitere Ausgestaltung der Erfindung dargestellt. Der Sammelschienenträger ist zusammengesetzt aus einem plattenartigen Träger 30, der dem Träger 10 entspricht, einem Isoliergehäuse 31, das dem Isoliergehäuse 11 entspricht, einer Stromsammelschiene 32, die der Stromsammelschiene 12 entspricht, und zwei Tragarmen 33 und 34, die den Tragarmen 13 und 14 entsprechen.

Der Träger 30 ist als rechteckige Platte ausgebildet, die zwei quer zur Längserstreckung der Sammelschiene 32 verlaufende Seitenkanten 35 und 36 (Querkanten genannt) aufweist, an denen die beiden Tragarme 33 und 34 anschließen.

Auf der Oberseite des Trägers 30 befindet ein kastenartiger Aufsatz mit zwei sich gegenüberliegenden Längswänden 36 und 37, wobei sich die Längswänden 36 und 37 beidseitig über die Seiten bzw. Querkanten 35 und 36 hinaus verlängern und an ihren Enden mit ihrem Quersteg 38 bzw. 39, welche parallel zu den Querkanten 35 und 36 verlaufen, verbunden sind. An den Querstegen sind U-förmige Rastfedern 40 und 41 angeformt (siehe Fig. 8) deren einer Schenkel 42 am Quersteg 38/39 angeformt ist und der andere Schenkel 43 die obere Fläche des kastenartigen Aufsatzes 44 überragt und dort eine Nase 45 aufweist, die den Bodensteg 46 einer aufgesetzten Hutprofilschiene 47 überragt bzw. hintergreift. Zu diesem Zweck besitzt der Bodensteg 46 eine Durchbrechung 48.

Damit sich die Normprofiltragschiene 47 nicht verschieben kann, sind Zapfen 49 vorgesehen, die den Bodensteg der Normprofiltragschiene durchgreifen. Die Zapfen selbst sind an im Bereich der Seitenkanten 35 und 36 angeordneten Innenquerstegen 50 bzw. 51 angeformt.

Zur Führung der Stromsammelschiene besitzt das Isoliergehäuse einen Bodenteil 52, an dessen der Hutprofilschiene 47 entgegengesetzten Kante eine Längswand 53 angeformt ist, die quer zu der Ebene der Trägerplatte 30 vorspringt. An der Längswand 53 und am Bodenteil 52 sind Trennwände 54 angeformt, die einen Raum 55 begrenzen, der zur Aufnahme jeweils einer Klemmschraube 56 gedacht ist. Im Bodenteil 52 befindet sich eine längsverlaufende Vertiefung 57, in die die Sammelschiene 32 eingefügt ist, und die Querwände 54 besitzen jeweils eine Durchbrechung 58, so daß die Sammelschiene 22 in der Vertiefung 57 gehalten ist. Die Sammelschiene 32 muß dann in Pfeilrichtung S durch die einzelnen Durchbrechungen 58 der Querwände hindurchgefädelt werden. Die Sammelschiene 32 besitzt Gewindebohrungen 59, in die die Klemmschrauben 56 eingeschraubt werden; unterhalb des Kopfes 60 jeder Klemmschraube ist eine dem Querschnitt des Raumes 55 angepaßte Unterlegscheibe 61 vorgesehen. In dem Bodenteil 52 befinden sich der Anzahl der Klemmschrauben entsprechende Durchbrechungen 72, durch die hindurch die Klemmschrauben greifen können, damit ein Festklemmen von Leitern zwischen der Unterlegscheibe und der Sammelschiene 61 bzw. 32 möglich ist und die Klemmschraube 56 frei in das Gewinde 59 eingeschraubt werden kann.

Zur Befestigung des Sammelschienenträgers dienen U-förmige Aussparungen 63 und 64 an den quer zu den Querkanten 35 und 36 verlaufenden Längskanten.

## Ansprüche

1. Sammelschienenträger mit einem langgestreckten Isoliergehäuse, das eine langgestreckte Stromsammelschiene aufnimmt, an der Anschlußleiter mittels Klemmschrauben festklemmbar sind, dadurch gekennzeichnet, daß parallel zum Isoliergehäuse (11,31) ein Träger (10,30) vorgesehen ist, der mit dem Isoliergehäuse mittels quer dazu verlaufender Tragarme (13,14;33,34) verbunden ist, und daß am Träger eine Normprofiltragschiene (15,16;47) zum Aufschnappen von Installationsgeräten angeordnet ist.

2. Sammelschienenträger nach Anspruch 1, dadurch gekennzeichnet, daß der Träger (10) längsverlaufende L-förmige Leisten (15,16) trägt, deren freie Schenkelenden voneinander wegweisend ausgerichtet sind und miteinander eine hutprofilartige Tragschiene für die Installationsgeräte bilden.

3. Sammelschienenträger nach Anspruch 1, dadurch gekennzeichnet, daß die Normprofiltragschiene (47) am Träger (30) befestigt, z. B. festgerastet ist.

4. Sammelschienenträger nach Anspruch 3, dadurch gekennzeichnet, daß am Träger (30) zwei federnde, die Normprofilschiene (47) durch je eine Öffnung (48) hindurchgreifende und die Normprofilschiene hintergreifende Rastnasen (45) und Führungsmittel (49) zur unverschieblichen Festlegung der Normprofilschiene angeordnet sind.

5. Sammelschienenträger nach einem der vorherigen Ansprüche, dadurch gekennzeichnet, daß der Träger (30) eine rechteckige ebene Platte ist, auf deren oberer Fläche ein die Platte an ihren quer zur Längserstreckung des Isolierkörpers verlaufenden Seitenkanten (Querkanten) (35,36) überragender Aufsatz vorgesehen ist, auf dessen oberer Seite die Normprofilschiene angebracht ist.

6. Sammelschienenträger nach Anspruch 5, dadurch gekennzeichnet, daß der Aufsatz zwei parallel zu der Sammelschiene verlaufende in Abstand zueinander angeordnete Wände (36,37) aufweist, die die Querkanten beidseitig überragen und die an ihrem freien Ende mit Querstegen (38,39) miteinander verbunden sind, an denen die Rastnasen (45) angeformt sind.

7. Sammelschienenträger nach Anspruch 6, dadurch gekennzeichnet, daß die Rastnasen an U-förmig ausgebildeten Rastarmen (42,43) angeordnet sind, die mit einem Schenkel an den Querstegen (38,39) und mit dem anderen Schenkel (43) im montierten Zustand die Hutprofilschiene in einer Ausnehmung (48) hintergreifen und so zur verrasteten Fixierung der Hutprofilschiene dienen.

8. Sammelschienenträger nach einem der vorigen Ansprüche, dadurch gekennzeichnet, daß die Klemmenebene (Sammelschienenebene) zur Aufschnappebene quer zur Aufschnappebene und parallel zur Aufschnappebene versetzt sind, wobei der Abstand der Sammelschiene quer zur Aufschnappebene etwa dem Abstand der Aufschnappebene der Installationsgeräte zu deren Anschlußklemmen beträgt.

9. Sammelschienenträger nach einem der vorigen Ansprüche, dadurch gekennzeichnet, daß die Tragarme (13,14;33,34) unter einem stumpfen Winkel von ca. 120° zur Aufschnappebene verlaufen.

10. Sammelschienenträger nach einem der vorigen Ansprüche, dadurch gekennzeichnet, daß die Tragarme an den Seitenkanten (35,36) der Platte anschließen.

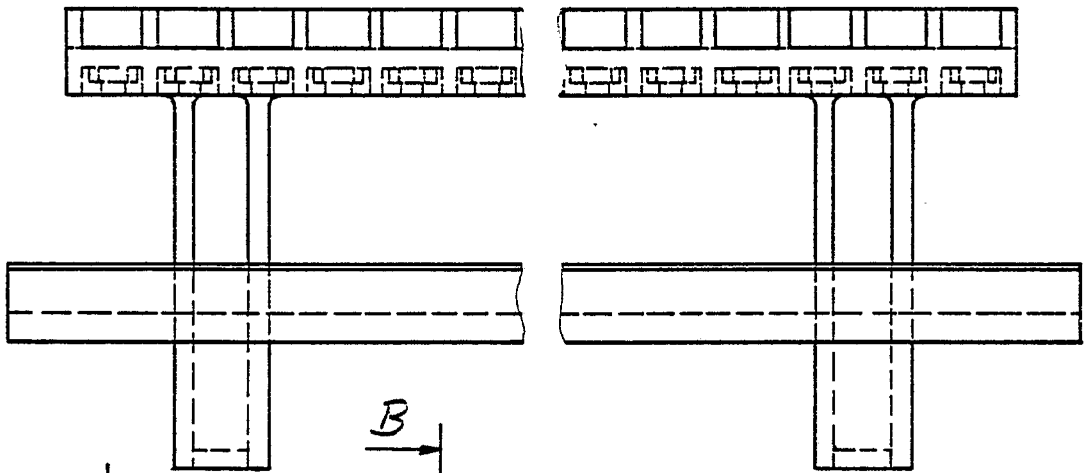

Fig.1

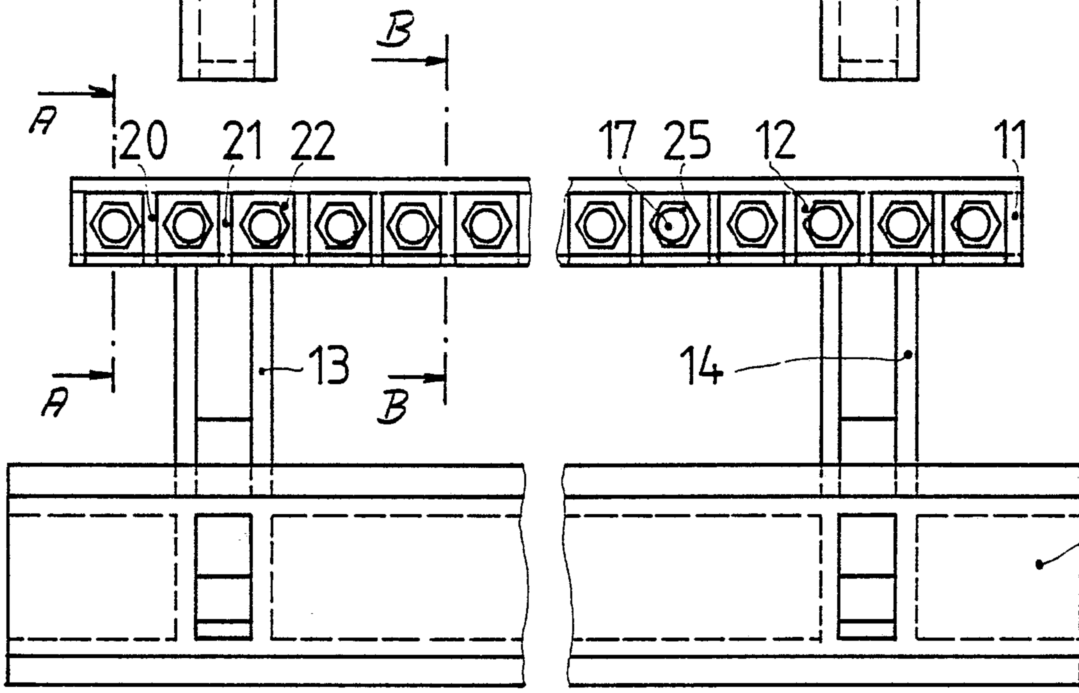


Fig.2

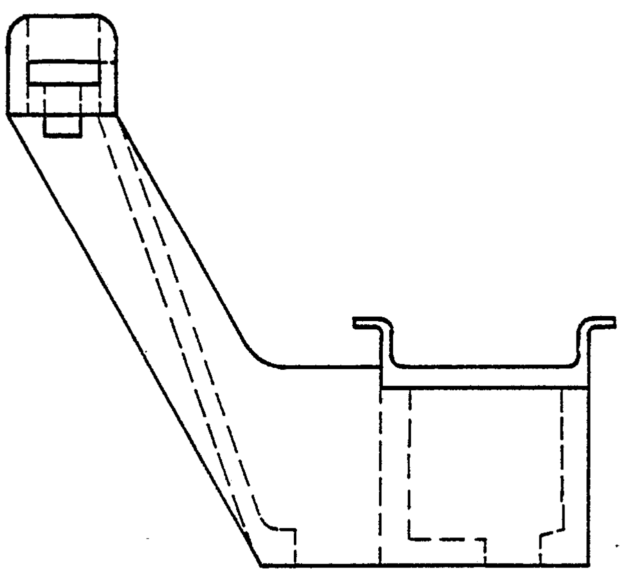

Fig.3

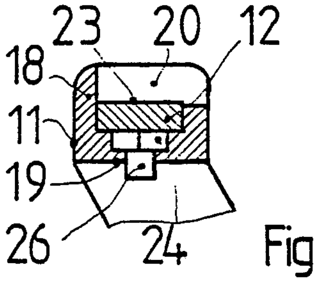


Fig.4

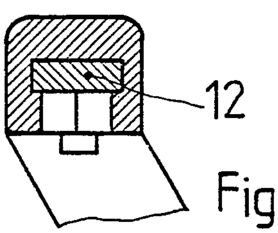


Fig. 5

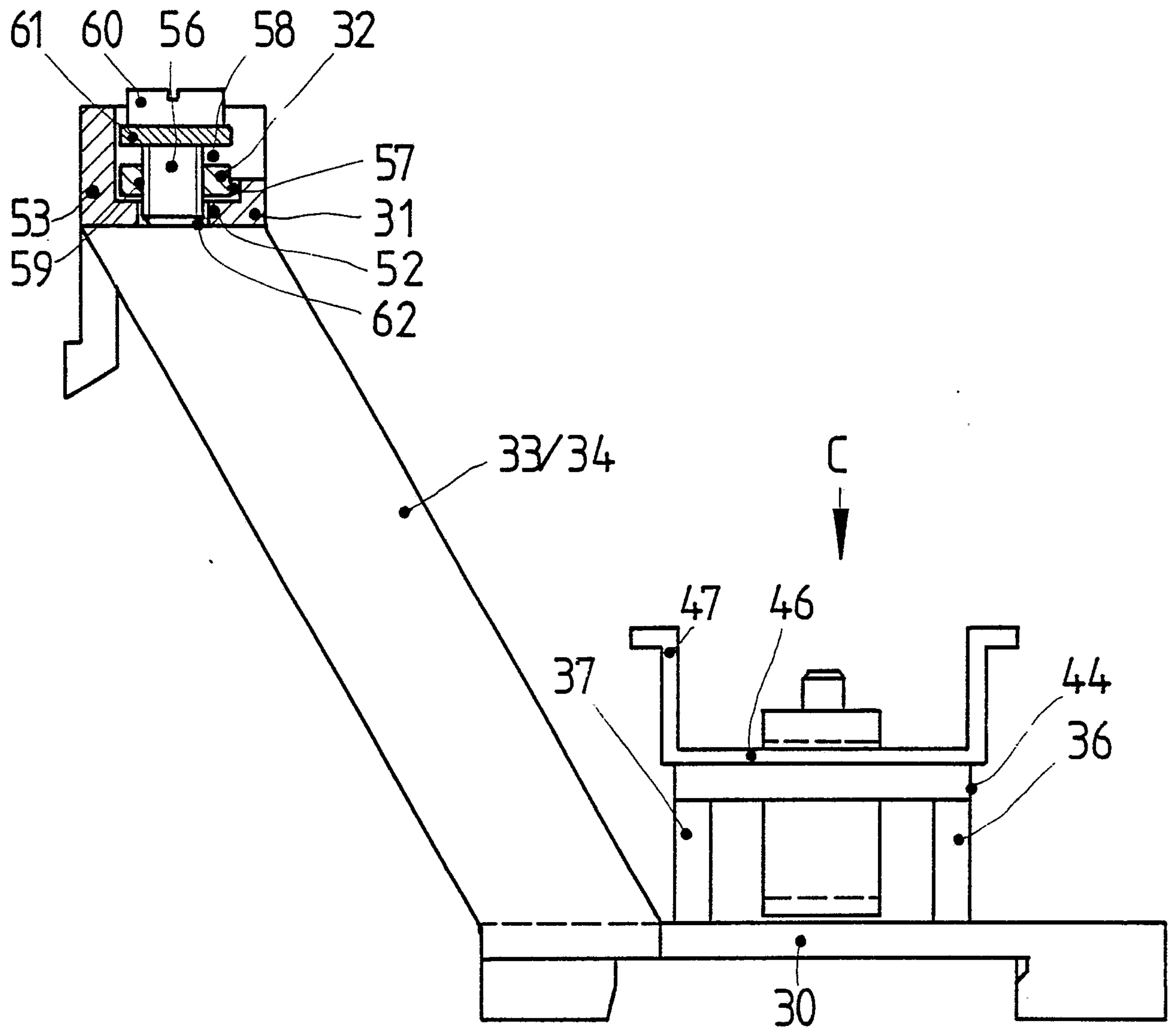


Fig.6

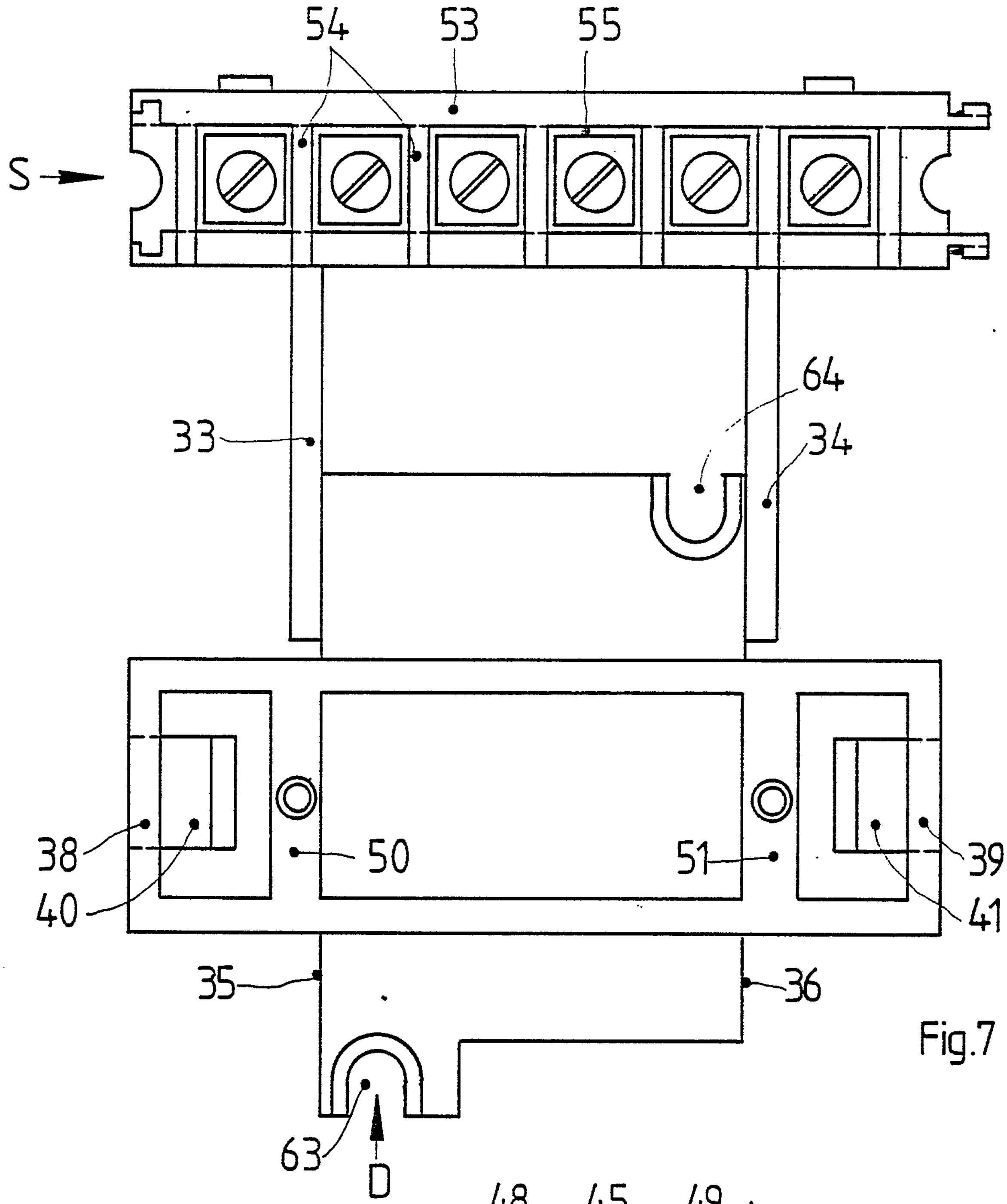


Fig.7

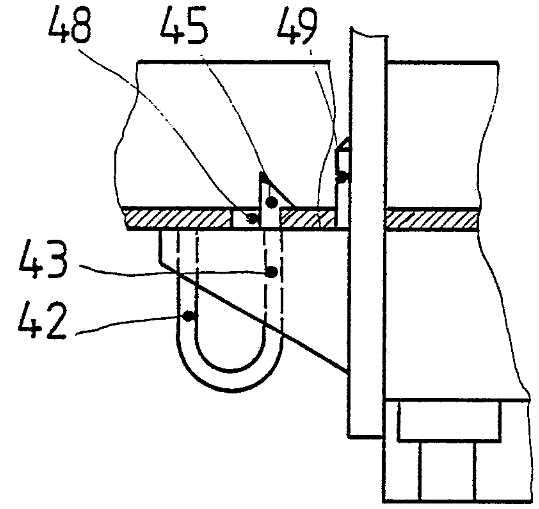


Fig.8